# EUROPEAN PATENT APPLICATION

(11) **EP 4 202 561 A1**
(43) Date of publication of application: **28.06.2023**
(21) Application number: 22213474.4
(22) Date of filing: 14.12.2022
(51) Int. Cl.: G03H 1/22, G03H 1/08, G02B 27/01

(54) **HOLOGRAM CALCULATION FOR COMPACT HEAD-UP DISPLAY**

(30) Priority: 23.12.2021 GB 202118911
(71) Applicant: Envisics Ltd., Milton Keynes MK1 1PT (GB)
(72) Inventor: SMEETON, Timothy, Milton Keynes, MK1 1PT (GB); ANTONELLO, Jacopo, Milton Keynes, MK1 1PT (GB); CHRISTMAS, Jamieson, Milton Keynes, MK1 1PT (GB)
(74) Representative: Greenaway, Martin William

(57) **Abstract**

An optical system and a method of calculating a hologram of a virtual image for the optical system is described. The optical system comprises a display device arranged to display the hologram and a waveguide arranged to replicate the hologram. The method comprises determining a sub-hologram of a virtual image point within an area defined by straight line paths from the virtual image point to the perimeter of an entrance pupil of a viewer. The area comprises at least part of a virtual replica of the display device formed by the waveguide.

## Description

### FIELD

The present disclosure relates to pupil expansion or replication, in particular, for a diffracted light field comprising diverging ray bundles. More specifically, the present disclosure relates a method for determining a diffractive structure, such as a hologram or kinoform, for display by a display system comprising a waveguide pupil expander and to a method of pupil expansion using a waveguide. Some examples of the display system relate to two-dimensional pupil expansion, using first and second waveguide pupil expanders. Some examples of the display system relate to picture generating unit and a head-up display, for example an automotive head-up display (HUD).

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micromirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

Broadly, the present disclosure relates to image projection. It relates to a method of image projection and an image projector (or optical system) which comprises a display device. The present disclosure also relates to a projection system comprising the image projector (optical system) and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a 'light engine'. The display device and the image formed (or perceived) using the display device are spatially separated from one another. The image is formed, or perceived by a viewer, on a display plane. In some examples, the image is a virtual image and the display plane may be referred to as a virtual image plane. In other examples, the image is a real image formed by holographic reconstruction and the image is projected or relayed to the viewing plane. The image is formed by illuminating a diffractive pattern (e.g., hologram) displayed on the display device.

The display device comprises pixels. The pixels of the display device may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In examples of the projector, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some examples of the projector, an image (formed from the displayed diffractive pattern/hologram) is propagated to the eyes. For example, spatially modulated light of an intermediate holographic reconstruction / image formed either in free space or on a screen or other light receiving surface between the display device and the viewer, may be propagated to the viewer.

In examples of the projector, the image is a real image. In other examples, the image is a virtual image that is perceived by a human eye (or eyes). The projection system, or light engine, may thus be configured so that the viewer looks directly at the display device. In such examples of the projector, light encoded with the hologram is propagated directly to the eye(s) and there is no intermediate holographic reconstruction formed, either in free space or on a screen or other light receiving surface, between the display device and the viewer. In such examples, the pupil of the eye may be regarded as being the entrance aperture of the viewing system and the retina of the eye may be regarded as the viewing plane of the viewing system. It is sometimes said that, in this configuration, the lens of the eye performs a hologram-to-image conversion.

In some other examples of the projector, the (light of a) diffractive pattern/hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these examples, there is no intermediate holographic reconstruction / image formed between the display device and the viewer. It is sometimes said that, in these examples, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. *x* and *y*. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-motion box.)

In some examples of the projector, the image perceived by a viewer is a virtual image that appears upstream of the display device - that is, the viewer perceives the image as being further away from them than the display device. Conceptually, it is possible to consider a plurality of different virtual image points of a virtual image. The distance from a virtual point to the viewer is referred to herein as a virtual image distance, for that virtual image point. Different virtual points may, of course, have different virtual image distances. Individual light rays, within ray bundles associated with each virtual point, may take different respective optical paths to the viewer, via the display device. However, only some parts of the display device, and therefore only some of the rays from one or more virtual points of a virtual image, may be within the user's field of view. In other words, only some of the light rays from some of the virtual points on the virtual image will propagate, via the display device, into the user's eye(s) and thus will be visible to the viewer. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some examples, the projection distance is at least one - such as, at least two - orders of magnitude greater than the diameter, or width, of the entrance pupil and/or aperture of the display device (i.e., size of the array of pixels). Examples of the present disclosure relate to a configuration in which a hologram of an image is propagated to the human eye rather than the image itself. In other words, the light received by the viewer is modulated according to (or encoded with/by) a hologram of the image. However, other examples of the present disclosure may relate to configurations in which the image is propagated to the human eye rather than the hologram - for example, by so called indirect view, in which light of a holographic reconstruction or "replay image" formed on a screen (or even in free space) is propagated to the human eye.

A waveguide is used to expand the field of view and therefore increase the maximum propagation distance over which the full diffractive angle of the display device may be used. Use of a waveguide can also increase the user's eye-box laterally, thus enabling some movement of the eye(s) to occur, whilst still enabling the user to see the image. The waveguide may therefore be referred to as a waveguide pupil expander. The present inventors, however, have found that for a non-infinite virtual image distance - that is, nearfield virtual images - so-called 'ghost images' appear owing to the different possible light propagation paths through the waveguide. A ghost image is a lower intensity replica of a main image. The main, highest intensity image may be referred to as the primary image. Each ghost image may be referred to as a secondary image. The presence of ghost images can significantly reduce the quality of a perceived virtual image. The ghost images may give the appearance of blurring of the primary image.

The present disclosure relates, in part, to addressing problems caused by the ghost images resulting from the use of a waveguide in a projector (optical system), by an improved technique for calculating a hologram such as a point cloud hologram.

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure relates to non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window - e.g., eye-box or eye motion box for viewing by the viewer. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

In examples of an optical waveguide, the first pair of opposing surfaces of a first waveguide are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of surfaces is arranged to cause the light to propagate within the first waveguide pupil expander, with the general direction of light propagation being in the direction along which the first waveguide pupil expander is relatively long (i.e., in its "elongate" direction).

There is disclosed herein examples of an image projector (optical system) that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram or point cloud hologram. The use of diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field (e.g. diffracted light comprising diverging (not collimated) ray bundles).

In aspects, the display system comprises a display device - such as a pixelated display device, for example a spatial light modulator (SLM) or Liquid Crystal on Silicon (LCoS) SLM - which is arranged to provide or form the diffracted (e.g. diverging) light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted (e.g. diverging) light field may be said to have "a light field size", defined in a direction substantially orthogonal to a propagation direction of the light field. Because the light is diffracted / diverging, the light field size increases with propagation distance.

In some examples of the projector described herein, the diffracted light field is spatiallymodulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and examples disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated (e.g. rod shaped) and the second waveguide pupil expander may be substantially planar (e.g. rectangular-shaped). The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

In order to provide suitable launch conditions to achieve internal reflection within the first and second waveguide pupil expanders, an elongate dimension of the first waveguide pupil expander may be tilted relative to the first and second dimensions of the second waveguide pupil expander.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some examples - described only by way of example of a diffracted or holographic light field in accordance with this disclosure - a hologram is configured to route light into a plurality of channels, each channel corresponding to a different part (i.e. sub-area) of an image. The hologram may be represented, such as displayed, on a display device such as a spatial light modulator. When displayed on an appropriate display device, the hologram may spatially modulate light transformable by a viewing system into the image. The channels formed by the diffractive structure (comprising the hologram) are referred to herein as "hologram channels" merely to reflect that they are channels of light encoded by the hologram with image information. It may be said that the light of each channel is in the hologram domain rather than the image or spatial domain. In some examples, the hologram is a Fourier or Fourier transform hologram and the hologram domain is therefore the Fourier or frequency domain. The hologram may equally be a Fresnel or Fresnel transform hologram. The hologram is described herein as routing light into a plurality of hologram channels merely to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be arbitrarily divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels. However, in some arrangements, a plurality of spatially separated hologram channels is formed by intentionally leaving areas of the target image, from which the hologram is calculated, blank or empty (i.e., no image content is present).

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the crosssectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the (special type of) hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

Broadly, a system is disclosed herein that provides pupil expansion for an input light field, wherein the input light field is a diffracted or holographic light field comprising diverging ray bundles. As discussed above, pupil expansion (which may also be referred to as "image replication" or "replication" or "pupil replication") enables the size of the area at/from which a viewer can see an image (or, can receive light of a hologram, which the viewer's eye forms an image) to be increased, by creating one or more replicas of an input light ray (or ray bundle). The pupil expansion can be provided in one or more dimensions. For example, two-dimensional pupil expansion can be provided, with each dimension being substantially orthogonal to the respective other.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffractive or diffracted light may be output by a display device such as a pixelated display device such as a spatial light modulator (SLM) arranged to display a diffractive structure such as a hologram. The diffracted light field may be defined by a "light cone". Thus, the size of the diffracted light field (as defined on a two-dimensional plane) increases with propagation distance from the corresponding diffractive structure (i.e. display device).

A spatial light modulator may be arranged to display a hologram (or a diffractive pattern comprising a hologram). The diffracted or diverging light may comprise light encoded with/by the hologram, as opposed to being light of an image or of a holographic reconstruction. In such examples of the projector (optical system), it can therefore be said that the pupil expander replicates the hologram or forms at least one replica of the hologram, to convey that the light delivered to the viewer is spatially modulated in accordance with a hologram of an image, not the image itself. That is, a diffracted light field is propagated to the viewer.

In some examples of the projector (optical system), two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

The present disclosure provides a method of calculating a hologram of a virtual image for an optical system. The optical system comprises a display device arranged to display the hologram. The optical system further comprises a waveguide arranged to receive and replicate the displayed hologram. The method comprises determining a sub-hologram of each virtual image point of the virtual image. Each sub-hologram is restricted to/defined within an area of the display device. The area of the display device corresponds to an area of a virtual surface containing the display device and virtual replicas thereof formed by the waveguide. The area of the virtual surface is defined/delineated/bounded by straight line paths from the respective virtual image point to the perimeter of the entrance pupil of a viewing system. The area of the display device for the sub-hologram spatially corresponds to the area of the virtual replica or replicas defined by the straight lines. At least a component of at least one sub-hologram - if not, the entire at least one sub-hologram - is determined e.g. calculated at a position (e.g. a plane) corresponding to a "virtual replica" of the display device formed by the waveguide.

According to an aspect of the present disclosure, a method of calculating a hologram is provided. The hologram is of a virtual image for an optical system. The optical system comprises a display device and waveguide. The waveguide may be a one-dimensional waveguide. The optical system may comprise a pair of orthogonal one-dimensional waveguides arranged to provide two-dimensional replication of the displayed hologram and/or two-dimensional expansion of the exit pupil of the display device. The display device is arranged to display the hologram. The waveguide is arranged to replicate the hologram. The method comprises determining a sub-hologram of a virtual image point within an area defined by straight line paths from the virtual image point to the perimeter of an entrance pupil of a viewer. The virtual image point may be one virtual image point of a plurality of virtual image points of the virtual image. The area comprises at least part of a virtual replica of the display device formed by the waveguide.

In embodiments, the method comprises identifying a virtual surface between the virtual image and the waveguide. The virtual surface comprises the display device and a plurality of replicas of the display device formed by the waveguide. The method further comprises identifying the area on the virtual surface.

In some embodiments, a first sub-hologram of a first virtual image point is determined within a first area of a first virtual replica of the display device.

In other embodiments, a first sub-hologram of a first virtual image point comprises a first sub-hologram component and second sub-hologram component. In an example, the first sub-hologram component is determined within a first area of a first virtual replica of the display device and the second sub-hologram component is determined within a second area of a second virtual replica of the display device. In another example, the first sub-hologram component is determined within a first area of a first virtual replica of the display device and the second sub-hologram component is determined within a second area of the display device. The method of these embodiments may further comprise superimposing the first sub-hologram component and second sub-hologram component to form the first sub-hologram of the first virtual image point. In some embodiments, a sub-hologram component is discarded from the step of superimposing if its size is less than a threshold value. In some embodiments, any portions of the first sub-hologram component and second sub-hologram component that would overlap if superimposed are discarded from the step of superimposing.

In embodiments, the method further comprises calculating a respective sub-hologram of each virtual image point of a plurality of virtual image points of the virtual image. The respective sub-holograms may then be superimposed to form a hologram of the virtual image.

In embodiments, each sub-hologram is a point cloud hologram determined by propagating a light wave from the corresponding virtual image point towards a viewer and determining the complex light field arriving at a corresponding position of the area, optionally, wherein the light wave is a spherical light wave or "wavelet". As the skilled person will appreciate, the determination of each sub-hologram may be performed computationally by simulating the propagation of light waves (wavelets) to form wavefronts/complex light fields.

In implementations, each virtual replica of the display device formed by the waveguide is a different perpendicular distance from the display device such that a staggered virtual surface of virtual replicas of the display devices is formed. In examples, each virtual replica of the display device corresponds to a respective replica of the hologram formed by the waveguide. The method may comprise determining the position of each virtual replica of the display device by unfolding the optical path within the waveguide from the display device to the corresponding replica of the hologram formed by the waveguide.

In another aspect of the present disclosure, a method of calculating a hologram is provided. The hologram is of a virtual image for an optical system comprising a display device arranged to display the hologram and a waveguide arranged to replicate the hologram. The method comprises determining a sub-hologram of each virtual image point of the virtual image. Each sub-hologram is determined by: propagating a light wave from the respective virtual image point towards a viewer; defining an area of intersection of the propagating light wave at a virtual surface between the virtual image and the viewer, wherein the virtual surface comprises the display device and a plurality of virtual replicas of the display device formed by the waveguide, wherein the defined area is bounded by straight line paths from the respective virtual image point to the perimeter of the entrance pupil of the viewer's eye; identifying one or more sub-areas of the defined area of the complex light field, wherein each sub-area intersects the virtual surface at a position corresponding to a different one of the display device and the plurality of virtual replicas. Each of the one or more sub-areas of the complex light field forms a respective component of the sub-hologram.

In embodiments, the virtual surface containing the display device and the plurality of virtual replicas is "staggered". In particular, each replica of the display device is a different perpendicular distance from the display device owing to the different path lengths in the waveguide associated with each replica. Thus, the part of the virtual surface (e.g. in the x, y dimensions) associated with each replica is offset from the display device in the perpendicular direction (e.g. in the z dimension).

There is provided a method of determining a sub-hologram of a virtual image point for an optical system comprising a display device arranged to display the hologram and a waveguide arranged to replicate the sub-hologram. The method comprises determining the sub-hologram within an area defined by straight line paths from the virtual image point to the perimeter of an entrance pupil of a viewer. The area comprises at least part of a replica of the display device formed by the waveguide. There is further provided a method of determining a hologram of a virtual image comprising a plurality of virtual image points, the method comprising repeating the method of determining a sub-hologram for each virtual image point of the virtual image.

In embodiments, a method of calculating a point cloud hologram is provided. The point cloud hologram is a hologram of a virtual image for an optical system comprising a display device arranged to display the hologram and waveguide arranged to replicate the hologram. The method comprises forming a point cloud sub-hologram at a position corresponding to that of the display device. The method also comprises forming a point cloud sub-hologram at each position corresponding to a respective virtual replica of the display device formed by the waveguide. Each point cloud sub-hologram is formed using only light rays from the virtual image that can pass through an entrance pupil of a viewer.

In embodiments, the method comprises determining the position of each replica of the display device by unfolding the corresponding optical path within the waveguide from the display device to the replica of the hologram.

In another aspect of the present disclosure, a hologram engine is provided. The hologram engine is arranged for calculating a hologram of a virtual image for an optical system comprising a display device arranged to display the hologram and a waveguide arranged to replicate the hologram. The hologram engine is arranged to determine a sub-hologram of a virtual image point within an area defined by straight line paths from the virtual image point to the perimeter of an entrance pupil of a viewer. The area comprises at least part of a virtual replica of the display device formed by the waveguide.

The term "virtual image" is used herein to refer to an image or holographic reconstruction formed upstream of the display device. That is, the display device is between the virtual image and a viewer. In other words, the distance from the virtual image to the viewer is greater than the distance from the display device to viewer. It will be understood by the person skilled in the art of optics that the viewer effectively looks through the display device to see the virtual image. The virtual image may be perceived several metres behind the display device. The person skilled in the art will therefore understand how it may be possible to consider light ray paths from the virtual image, through the display device or an extended surface containing the display device, to a viewer on the other side of the display device.

The prefix "sub" in relation to each hologram of the plurality of holograms formed on the display device and replicas thereof is used merely to distinguish from the final/combined hologram of the entire virtual image and reflect that each is a component of the hologram. The hologram may be a point cloud hologram. The sub-hologram and sub-hologram components may therefore also be point cloud sub-holograms or point cloud sub-hologram components, respectively.

As described herein, the waveguide effectively forms an array of replicas of the display device (also called "virtual replicas" herein), wherein each display device replica corresponds to a respective replica of the hologram. The array of replica display devices is referred to herein as a "staggered surface". The "surface" is not continuous because the replicas are spatially separated in a direction normal to the surface of the display device e.g. in the z-direction. The surface is referred to as "staggered" to reflect this changing separation of the different display device replicas in the z-direction. Generally, the display device replicas are on different x, y planes that are spatially offset in the z-direction (in the absence of any skew). In the case of replication in one-dimension using one waveguide, the staggered surface may resemble a series of free-standing steps, wherein the risers of the steps are absent. In the case of replication in two orthogonal directions using two orthogonal waveguides as known in the art of pupil expansion, the staggered surface is effectively staggered in two directions e.g. x and y but there is no surface component in the z-direction. The terms "virtual surface", "staggered extended modulator" and "extended surface" may also be used herein to refer to the array of replicas of the display device formed by the waveguide. The present disclosure describes how each sub-hologram is restricted to/defined within an area of the display device spatially-corresponding to an area of staggered or virtual surface defined by straight line paths from the respective virtual image point to the perimeter of the entrance pupil of a viewing system. The area of the staggered or virtual surface effectively defines a "contributory area" of the display device to use for the sub-hologram.

The step of "unfolding" an optical path within the waveguide is described with reference to the process of straight-line extrapolating a light ray that exits the waveguide through its output port (i.e. a light ray of a replica) back to the virtual surface without internal reflection within the waveguide. By extrapolating all light rays of a replica back to the virtual surface, a location or position of a corresponding virtual replica of the display device is identified. Each virtual replica of the display device is at a different distance from the viewer because of the different optical path lengths within the waveguide associated with each replica. The present disclosure describes a process of "superimposing" sub-holograms and components of a sub-hologram with reference to a process of combining holograms that preserves positional or spatially information on the display device e.g. on the xy plane.

Reference herein to determining sub-holograms or sub-hologram components at various "positions" is made with reference to positions in the direction normal to the surface of the display device - which may also be referred to herein as the propagation or projection axis. As will be familiar to the person skilled in the art of optics, the propagation axis is typically defined as the z-axis. The display device, and virtual replicas thereof, are each typically defined on the xy plane. In some embodiments, point cloud holograms are determined by propagating light waves to the "positions" or planes described.

Reference is made herein to restricting each sub-hologram to (or defining each sub-hologram within) an area or areas defined/bounded/delineated by straight-lines. Each area is an area of the display device defined by or corresponding to an area of the virtual surface. For example, if the straight lines define an area in the middle of a single virtual replica, the sub-hologram is restricted to/defined within that middle area of the display device. Likewise, if the straight lines intersect two or more virtual replicas, each area of a virtual replica (or "sub-area" of the delineated area of the virtual surface] effectively defines a corresponding area (or "sub-area") of the display device. In some embodiments, overlapping areas are defined on different virtual replicas and these areas may be treated differently in accordance with further improvements disclosed herein.

For the avoidance of doubt, the image formed or perceived is a holographic reconstruction of a target image. The holographic reconstruction is formed from a hologram based on the target image. In some embodiments, the hologram is determined (e.g. calculated) from the target image.

The method disclosed herein identifies contributory light paths for forming the virtual image points of a main image. The contributory light paths are light paths from the virtual image that pass through the entrance pupil of the viewer - thereby contributing to image formation. Thus, the method does not consider light paths that contribute to a copy/replica or 'ghost' version of the primary image. Accordingly, all "sub holograms" of the calculated hologram contribute positively to a 'main' target image.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with/by the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer (e.g. from a display device to a viewing system). The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some examples, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography. Embodiments relate to the calculation of point cloud holograms - that is, holograms built up using point cloud methods.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image comprising a plurality of image areas (bottom) and corresponding hologram comprising a plurality of hologram components (top);
Figure 3 shows a hologram characterised by the routing or channelling of holographically encoded light into a plurality of discrete hologram channels;
Figure 4 shows a system arranged to route the light content of each hologram channel of Figure 3 through a different optical path to the eye;
Figure 5 shows a perspective view of a pair of stacked image replicators arranged for expanding a beam in two dimensions;
Figure 6 shows an example visualisation of an "extended modulator" or "virtual surface" comprising a 3D array including a display device and a plurality of replicas of the display device formed by a waveguide;
Figure 7 shows an arrangement for calculating a point cloud hologram using an extended modulator, showing the paths of waves propagated from first and second example image points of a desired virtual image to be holographically reconstructed by the hologram;
Figure 8 shows the calculation of a sub hologram for the first example image point of the arrangement of Figure 7;
Figure 9 shows the calculation of a sub hologram for the second example image point of the arrangement of Figure 7;
Figure 10 illustrates a first criterion for including information from sub-areas of an example complex light pattern, at an area of intersection with an extended modulator, in a corresponding sub hologram;
Figure 11A illustrates a second criterion for including information from sub-areas of another example complex light pattern, at an area of intersection with an extended modulator, in a corresponding sub hologram, and
Figure 11B shows the sub hologram formed using the second criterion and the complex light pattern of Figure 11A.

The same reference numbers will be used throughout the drawings to refer to the same or like parts.

### DETAILED DESCRIPTION

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike-the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in codependent relationship.

### Optical configuration

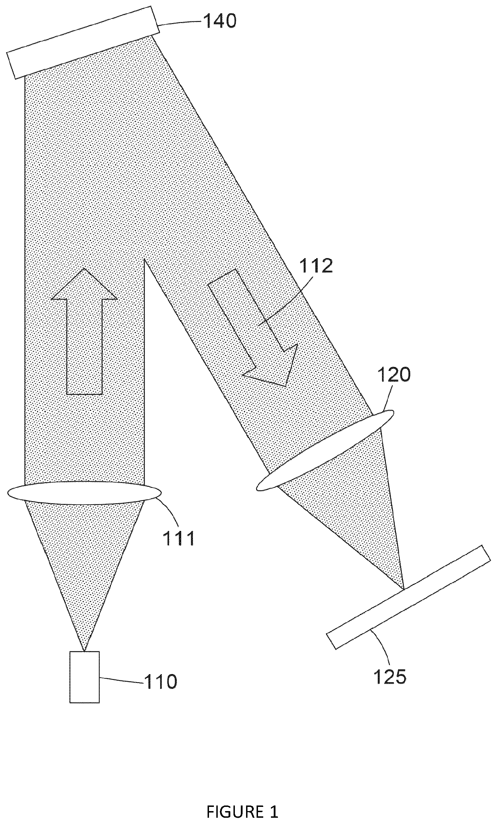

Figure 1 shows an embodiment of a projector (optical system) in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other examples, the generally planar wavefront is provided at normal incidence and a beam splitter arrangement is used to separate the input and output optical paths. In the example shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments of the projector, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

### Hologram calculation

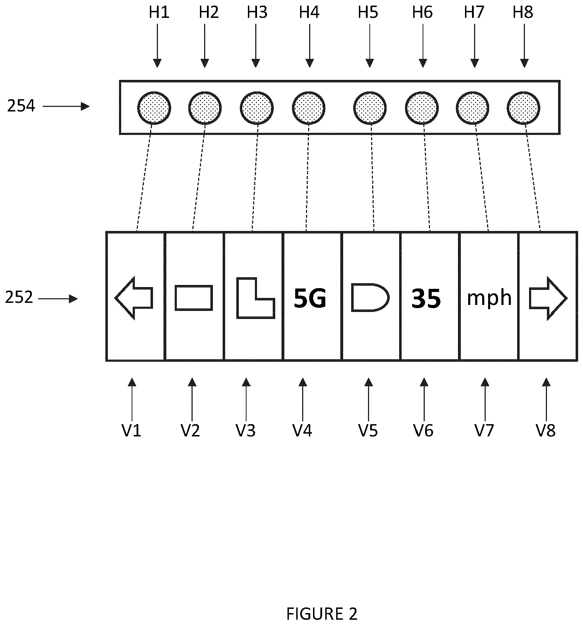

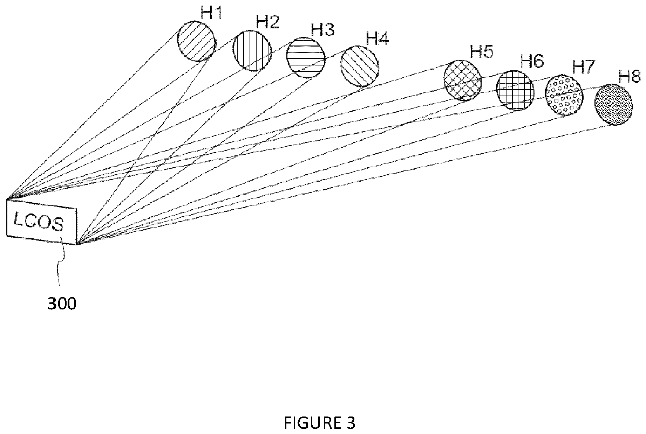

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, embodiments relate to holograms calculated based on point cloud methods. British patent application GB 2112213.0 filed 26 August 2021, incorporated herein by reference, discloses example hologram calculation methods that may be combined with the present disclosure. In particular, the earlier patent application describes methods for calculating a (special) type of hologram, described below with reference to Figures 2 and 3, that angularly divides/channels the image content.

In some embodiments of the projector, there is provided a real-time engine arranged to receive image data and calculate holograms in real-time using the algorithm. In some examples, the image data is a video comprising a sequence of image frames. In other embodiments of the projector, the holograms are pre-calculated, stored in computer memory and recalled as needed for display on a SLM. That is, in some embodiments, there is provided a repository of predetermined holograms.

### Light modulation

The display system comprises a display device defining the exit pupil of the display system. The display device is a spatial light modulator. The spatial light modulation may be a phase modulator. The display device may be a liquid crystal on silicon, "LCOS", spatial light modulator as well known in the art. A LCOS SLM comprises a plurality of pixels, such as an array of quadrilateral shaped LC pixels. The pixels may be addressed or encoded with a diffractive pattern comprising a hologram. It may be said that the LCOS SLM is arranged "display" a hologram. The LCOS SLM is arranged to be illuminated with light, and to output spatially modulated light in accordance with the hologram. The spatially modulated light output by the LCOS SLM comprises a diffracted or holographic light field as described herein.

### Light channelling

The optical system disclosed herein is applicable to pupil expansion with any diffracted light field. In some embodiments of the optical system, the diffracted light field is a holographic light field - that is, a complex light field that has been spatially modulated in accordance with a hologram of an image, not the image itself. In some embodiments of the optical system, the hologram is a special type of hologram that angularly divides/channels the image content. This type of hologram is described further herein merely as an example of a diffracted light field that is compatible with the present disclosure. Other types of hologram may be used in conjunction with the display systems and light engines disclosed herein.

A display system and method are described herebelow, which comprise a waveguide pupil expander. As will be familiar to the skilled reader, the waveguide may be configured as a 'pupil expander' because it can be used to increase the area over (or, within) which the light emitted by a relatively small light emitter - such as a relatively small SLM or other pixelated display device as used in the arrangements described herein - can be viewed by a human viewer or other viewing system that is located at a distance, such as a relatively large distance, away from the light emitter. The waveguide achieves this by increasing the number of transmission points from which the light is output, towards the viewer. As a result, the light may be seen from a plurality of different viewer locations and, for example, the viewer may be able to move their head, and therefore their line of sight, whilst still being able to see the light from the light emitter. Thus, it can be said that the viewer's 'eye-box' or 'eye-motion box' is enlarged, through use of a waveguide pupil expander. This has many useful applications, for example but not limited to head-up displays, for example but not limited to automotive head-up displays.

A display system as described herein may be configured to guide light, such as a diffracted light field, through a waveguide pupil expander in order to provide pupil expansion in at least one dimension, for example in two dimensions. The diffracted light field may comprise light output by a spatial light modulator (SLM), such as an LCOS SLM. For example, that diffracted light field may comprise light that is encoded by a hologram displayed by the SLM. For example, that diffracted light field may comprise light of a holographically reconstructed image, corresponding to a hologram displayed by the SL M. The hologram may comprise a computer-generated hologram (CGH) such as, but not limited to, a point-cloud hologram, a Fresnel hologram, or a Fourier hologram. The hologram may be referred to as being a 'diffractive structure' or a 'modulation pattern'. The SLM or other display device may be arranged to display a diffractive pattern (or, modulation pattern) that comprises the hologram and one or more other elements such as a software lens or diffraction grating, in a manner that will be familiar to the skilled reader.

The hologram may be calculated to provide channelling of the diffracted light field. This is described in detail in each of GB2101666.2, GB2101667.0, and GB2112213.0, all of which are incorporated by reference herein. In general terms, the hologram may be calculated to correspond to an image that is to be holographically reconstructed. That image, to which the hologram corresponds, may be referred to as an 'input image' or a 'target image'. The hologram may be calculated so that, when it is displayed on an SLM and suitably illuminated, it forms a light field (output by the SLM) that comprises a cone of spatially modulated light. In some embodiments the cone comprises a plurality of continuous light channels of spatially modulated light that correspond with respective continuous regions of the image. However, the present disclosure is not limited to a hologram of this type.

Although we refer to a 'hologram' or to a 'computer-generated hologram (CGH)' herein, it will be appreciated that an SLM may be configured to dynamically display a plurality of different holograms in succession or according to a sequence. The systems and methods described herein are applicable to the dynamic display of a plurality of different holograms.

Figures 2 and 3 show an example of a type of hologram that may be displayed on a display device such as an SLM, which can be used in conjunction with a pupil expander as disclosed herein. However, this example should not be regarded as limiting with respect to the hologram calculation method of the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of the entrance pupil of the viewing system.

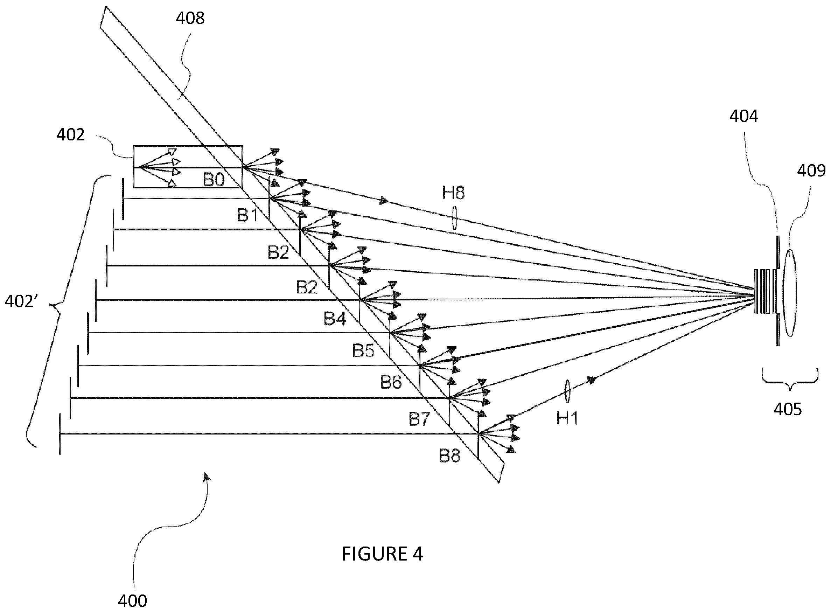

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or 'diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

The methods and arrangements described above can be implemented in a variety of different applications and viewing systems. For example, they may be implemented in a head-up-display (HUD) or in a head or helmet mounted device (HMD) such as an Augmented Reality (AR) HMD.

Although virtual images, which require the eye to transform received modulated light in order to form a perceived image, have generally been discussed herein, the methods and arrangements described above can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

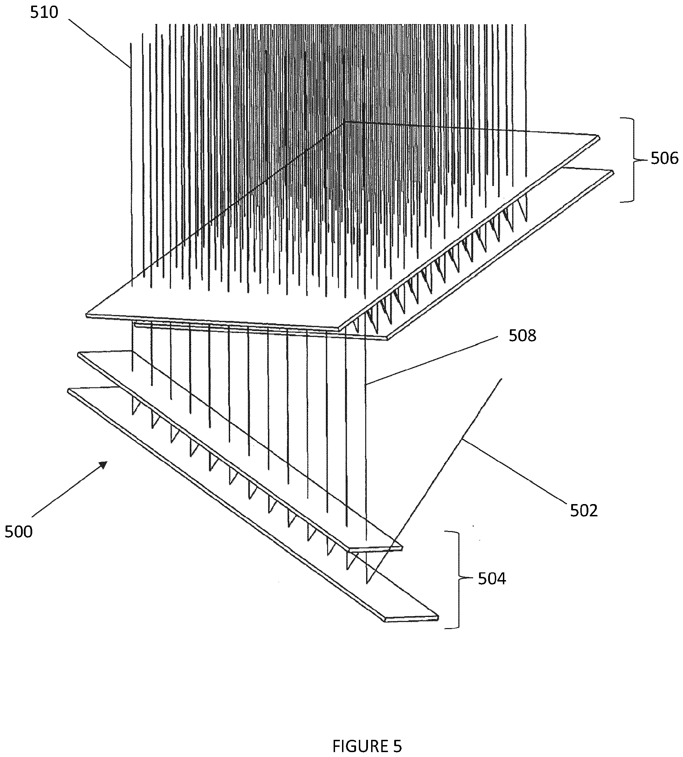

Figure 5 shows a perspective view of a system 500 comprising two replicators, 504, 506 arranged for expanding a light beam 502 in two dimensions.

In the system 500 of Figure 5, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The light beam 502 is directed towards an input on the first replicator 504. Due to a process of internal reflection between the two surfaces, and partial transmission of light from each of a plurality of output points on one of the surfaces (the upper surface, as shown in Figure 5), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5 combine to provide a two-dimensional replicator (or, "two-dimensional pupil expander").

Virtual replicas of the display device formed by the waveguide or waveguides

Conventionally, for calculation of a point cloud hologram of an image (such as a virtual image), the image is broken down into (i.e. represented by) a plurality of individual points - referred to herein as 'virtual points'. A light wave - e.g. spherical wave - (or 'wavelet') is then propagated computationally - i.e. using a model or other theoretical tool - from each virtual point, at its intended or desired location, within the virtual image, to the plane of the hologram e.g. display device that will be used to display the hologram - such as the plane of the LCOS, in the examples described hereabove. The wavelets from a plurality of virtual image points are combined with one another and the resulting amplitude and/or phase distribution/pattern at the display device is calculated. The display device can then be configured, in a manner that is well known and so will not be described herein, to display the hologram, in order to recreate the wavelets, and thus to create a reconstruction of the image.

However, as described herein, in certain display system applications, one or more waveguides are used for pupil expansion. The inventors have recognised that pupil expansion using light ray replication has the effect of creating "virtual replicas" of the display device in a two-dimensional array and that the location of these replicas may be used to help eliminate ghost images that can appear because of the plurality of different light propagation paths within the waveguide. The inventors have further realised that, due to the optical path distance through the one or more waveguides, the depths of the virtual replicas (measured from the eye-box) are different and the method disclosed herein must account for these differences. For the avoidance of doubt, these different virtual replicas of the display device contribute to the same reconstructed virtual image which therefore appears at the same depth to the viewer from all positions within the eye-box.

Accordingly, the present disclosure proposes a new method for calculating a hologram of the virtual image, such that, for a particular target eye position, the displayed hologram creates a wavefront, after the pupil expander, as if it was generated by the target image.

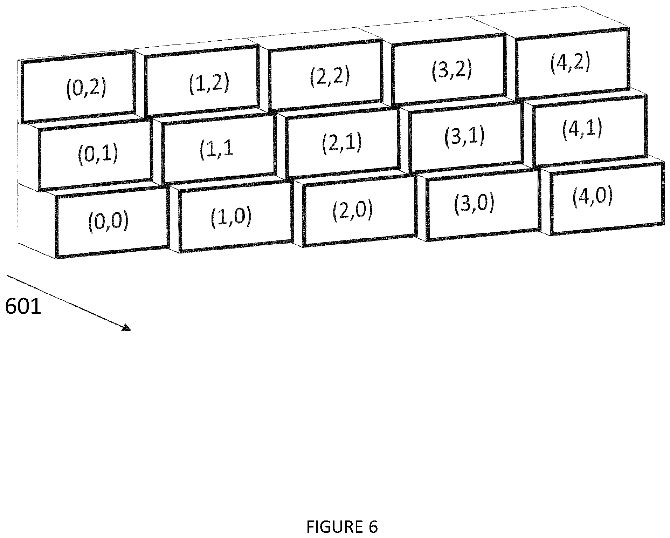

Figure 6 shows an example visualisation of an "extended modulator" or "virtual surface" comprising a 3D array including a hologram formed on a display device and a plurality of replicas of the hologram formed by a waveguide.

As noted above with reference to Figure 4, a one-dimensional waveguide 408 may be arranged to expand the exit pupil of a display system. The display system comprises a display device 402 displaying a hologram, which is output at "bounce" point B0 of waveguide 408. In addition, the waveguide forms a plurality of replicas of the hologram, at respective "bounce" points B1 to B8 along its length, corresponding to the direction of pupil expansion. As shown in Figure 4, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

The proposed method of calculating a hologram defines a so-called "extended modulator", in which the display device (e.g. LCOS SLM) is "extended" by an array of virtual replicas thereof, which would be formed by one or more waveguide pupil expanders, to form an "extended modulator" or "virtual surface" (e.g. as shown in Figure 4). For example, the display device (e.g. LCOS SLM) may be located at position (0, 0) of the extended modulator shown in Figure 6, and (virtual) replicas (i.e. replica display devices) that would be formed by two one-dimensional pupil expanders are located at positions extending to (0,2) in a first direction of pupil expansion and (4, 0) in a second direction of pupil expansion. The direction of the optical path is shown by arrow 601, which is perpendicular to the first and second directions of pupil expansion.

Accordingly, an extended modulator is defined comprising: (i) a first offset between replicas generated in a first waveguide pupil expander (e.g. an elongate waveguide) defined by an angle (in space) and corresponding direction of pupil expansion, (ii) a second offset between replicas generated in a second waveguide pupil expander (e.g. planar waveguide) defined by an angle (in space) and corresponding direction of pupil expansion; (iii) any skew between the direction of the first offset and the second offset - creating the general parallelogram shape in Figure 6, and (iv) the optical path length (difference) between display device replicas and the eye position - in the direction 601 shown in Figure 6.

### Hologram calculation using an extended modulator comprising virtual replicas

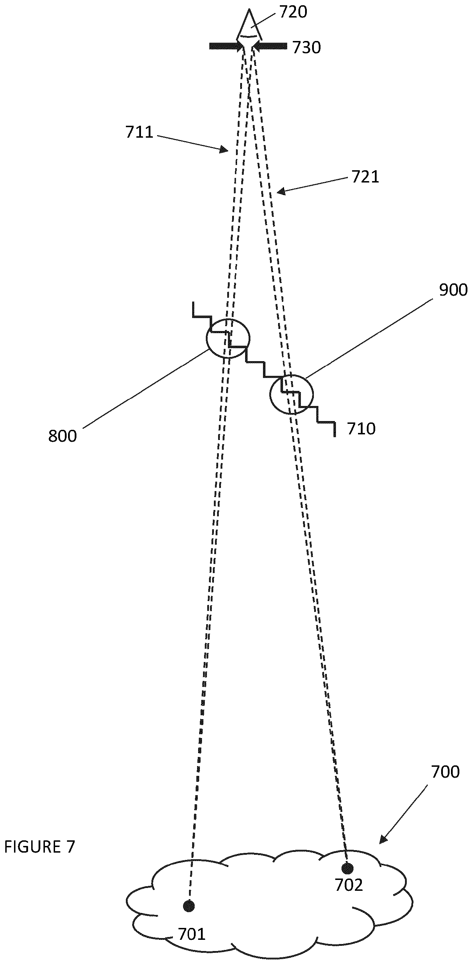

Figure 7 shows an arrangement for calculating a point cloud hologram using an extended modulator, such as the extended modulator shown in Figure 6, in accordance with an embodiment of the present disclosure.

The arrangement comprises a virtual image 700 at a desired virtual image position in space, and a viewing system comprising an eye 720 having a pupil forming an entrance aperture 730 of the viewing system. The arrangement shows one position of the eye 720 within the eye-box. Thus, the point cloud hologram is associated with a particular eye-box position. In addition, the arrangement comprises an extended modulator (or virtual surface) 710 positioned between the virtual image 700 and the eye 720. As the skilled person will appreciate, in Figure 7, the optical path is effectively "unfolded" within the waveguide.

In accordance with conventional techniques for calculating a point hologram well known in the art, spherical waves (or 'wavelets') are propagated along a path from each virtual image point to the plane of a display device. The point cloud hologram is determined based on (e.g. by combining/superimposing) the complex light pattern (i.e. a complex light field having an amplitude and phase distribution) formed by the wavelets propagating from each virtual image point at its respective area of intersection with the plane of the display device. It may be said that the complex light pattern of the wavelets associated with each virtual image point is "captured" at the corresponding area of intersection with the plane of the display device.

However, in accordance with the present disclosure, the point cloud hologram is determined based on (e.g. by combining/superimposing) the complex light pattern (i.e. amplitude and or phase distribution) formed by the wavelet propagating from each virtual image point at its respective area of intersection with the extended modulator or virtual surface. Moreover, only the parts of the wavelets propagating from the virtual image points that reach the viewer's eye are considered.

Figure 7 shows first and second example virtual image points 701, 702 of a virtual image 700 positioned at a desired distance from a viewer's eye 720. As shown by dashed lines, (expanding) spherical waves or wavelets are propagated from each example virtual image point 701, 702 through the extended modulator 710 to the entrance aperture 730 of the viewer's eye 720. A first pair of straight lines 711 extend from first virtual image point 701 to opposite extreme positions of the entrance aperture 730 (i.e. left and right hand sides in the drawing) representing the edges/perimeter of (the relevant part of) the associated wavelet. Similarly, a second pair of straight lines 721 extend from second virtual image point 702 to opposite extreme positions/edges of the entrance aperture 730 (i.e. left and right hand sides in the drawing) representing the edges/perimeter of (the relevant part of) the associated wavelet. The first and second pairs of straight lines 711, 721 have respective areas of intersection 800, 900 with the extended modulator 710 (or virtual surface). Thus, the first and second pairs of straight lines 711, 721 "delineate" (i.e. form a boundary around) the desired (part of the) wavelet, in accordance with this disclosure, associated with the first and second virtual image points 701, 702, respectively, that can pass through the entrance aperture 730 (i.e. pupil) of the viewer's eye 720 at the particular eye-box position. In the following description, references to the 'wavelet' propagating from a virtual image point relate to the part of the propagating wave that is delineated by straight lines, as described above.

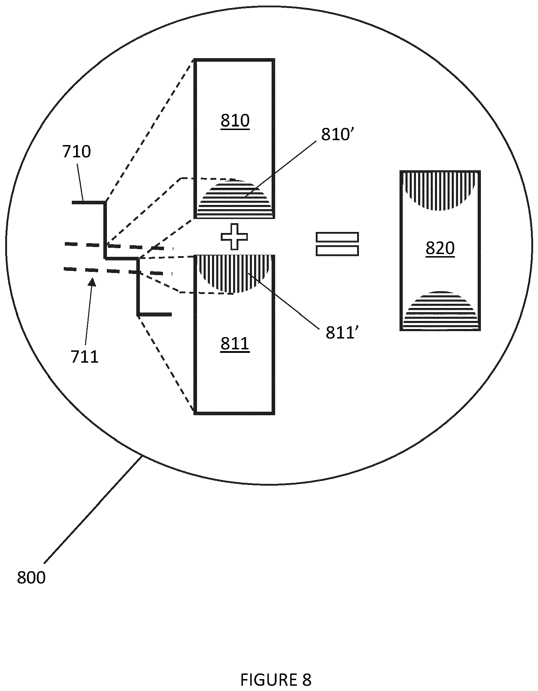

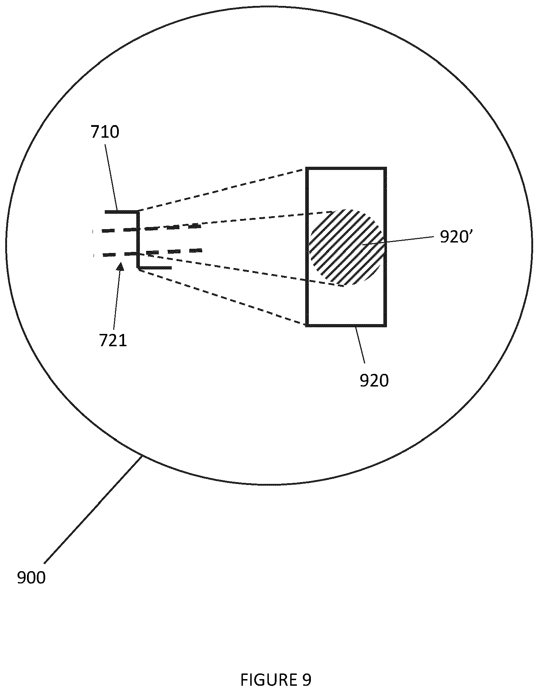

Since the extended modulator is "staggered", as described herein, the area of intersection of the wavelet propagating from each virtual image point is at different perpendicular distance (to the plane of the display device) - or different distance in the propagation direction. In particular, the wavelets propagating from different virtual image points pass thought different "replicas" (of the display device) of the extended modulator 710. Some wavelets - e.g. the one associated with virtual image point 701 - may intersection a plurality of replicas, whilst other wavelets - e.g. the one associated with virtual image point 702 - intersection only a single replica, as described further below. For example, Figure 7 shows a first area of intersection 800 with the extended modulator 710 of a first wavelet, delineated/bounded by first pair of lines 711, propagating from first virtual image point 701 to the eye 720. Similarly, Figure 7 shows a second area of intersection 900 with the extended modulator 710 of a second wavelet, delineated/bounded by the second pair of lines 721, propagating from second virtual image point 702 to the eye 720. These areas of intersection are described below with reference to Figures 8 and 9.

Figure 8 shows the first area of intersection 800 with extended modulator 710 of the first wavelet, delineated by the first pair of lines 711, propagating from first virtual image point 701 in more detail. In particular, the first wavelet intersects in an area comprising two adjacent virtual replicas of the extended modulator 710 - these virtual replicas are shown as horizontal lines in Figure 7 and vertical lines in Figure 8. As noted above, different virtual replicas of the extended modulator are in different planes at different perpendicular distances. Accordingly, the complex light pattern at an area of intersection with each virtual replica of the extended modulator is determined separately. This is necessary because the parts of the wavelet intersecting the two adjacent virtual replicas will have propagated different distances from the virtual image point 791 and so have different complex light patterns or wavefronts on arrival at the extended modulator.

Reference is made in the following to a "complex light pattern" to refer to a spatial distribution of pairs of amplitude and phase values representative of the light field that arrives at the extended modulator from each virtual image point. In other words, the "complex light pattern" corresponds to the wavefront of the wavelet at the point or points it intersections the extended modulator. In embodiments, the "complex light pattern" is an array of pairs of amplitude and phase values. In some examples, the display device is a phase modulator in which case amplitude values may ultimately be ignored or discarded. The "complex light pattern" may also be referred to as a "complex light field".

Accordingly, Figure 8 shows a first complex light pattern 810' formed by the wavelet at the intersection with a first virtual replica of the extended modulator 710 (shown at the top of the drawing). The first complex light pattern 810' is "captured" at the plane of the first virtual replica and forms a first sub-hologram component 810 associated with first virtual image point 701. In addition, Figure 8 shows a second complex light pattern 811' formed by the wavelet at the intersection with a second virtual replica of the extended modulator 710 (shown at the bottom of the drawing). The second complex light pattern 811' is "captured" at the plane of the second virtual replica and forms second sub-hologram component 811 associated with first virtual image point 701. Notably, the area of intersection at each of the first and second virtual replicas of the extended modulator 710 is shown as (a part of) a circle or ellipse. This corresponds to a "primary contributory area" because it corresponds to light rays that pass through the entrance pupil of the viewing system. In some cases, this ensures that a primary image (and not "ghost image") is formed by the viewing system. In some embodiments, the shape of the primary contributory area corresponds to (e.g. has the same general shape but not necessarily the same size as) that of the entrance pupil of the viewing system. Since the complex light patterns 810', 811' formed by the wavelet are positioned at the edges of the respective virtual replicas, the primary contributory area is at the top and bottom edges of the sub-hologram 820 of virtual image point 701.

Figure 8 shows that the first sub-hologram component 810 and the second sub-hologram component 811 are combined - in particular superimposed - to form a sub-hologram 820 associated with first virtual image point 701. In particular, spatial information (on the display device) associated with each complex light pattern 810', 811' is retained in the step of superimposing. That is, first complex light pattern 810' is formed at a position corresponding to a lower region of the display device and so appears at the corresponding lower region of the final sub-hologram 820 of this virtual image point 701. Likewise, second complex light pattern 811' is formed at a position corresponding to an upper region of the display device and so appears at the corresponding upper region of the final sub-hologram 820 of this virtual image point 701. In this example, the first complex light pattern 810' and second complex light pattern 811' are non-overlapping -and so can be superimposed to form the final sub-hologram 820 for this virtual image point without any further processing.

Figure 9 shows an area of intersection 900 with extended modulator 710 of the second wavelet, delineated by the second pair of lines 721, propagating from second virtual image point 702 in more detail. In particular, the wavelet intersects in an area of a single virtual replica of the extended modulator 710 -this virtual replica is shown as a horizontal line in Figure 7 and a vertical line in Figure 9. Accordingly, the complex light pattern 920' at the area of intersection at the (single) plane of the virtual replica of the extended modulator 710 is captured and forms a sub-hologram 920 associated with second virtual image point 702. Once again, the area of intersection at the virtual replica of the extended modulator 710 is shown as a circle or ellipse. This corresponds to a "primary contributory area" for the second virtual image point 702. Since the complex light pattern formed by the wavelet is positioned at the centre of the virtual replica, the primary contributory area is at the centre of the sub-hologram 920 for this virtual image point 702.

A point cloud hologram is determined for the entire virtual image 700 by combining/superimposing (e.g. by vector addition) the sub-holograms e.g. 820, 920 associated with each virtual image point e.g. 701, 702 of the virtual image 700.

Since the improved method of calculation of the point cloud hologram uses an extended modulator, it automatically takes into account the differences in (i) first offsets between replicas in a first dimension, (ii) second offsets between replicas in a second dimension and (iii) any skew between replicas generated by one or more waveguide pupil expanders, as well as (iv) optical path length differences between replicas to the eye position, as described above.

Furthermore, the improved method of calculation of the point cloud hologram only takes into account wavelets/light rays from the virtual image that can pass through the entrance pupil of the viewer's eye at the relevant eye position. Thus, only light rays that contribute to the "main image" (and not ghost image) are considered - i.e. the primary contributory areas at the intersection of the wavelets with the extended modulator. In consequence, the improved method automatically avoids the undesirable formation of "ghost images", as described above. Furthermore, since the method only propagates wavelets/light rays from the virtual image that can pass through the entrance pupil of the viewer's eye at the relevant eye position, the computational complexity is reduced. In this way, the speed of calculating the point cloud hologram is reduced, as is the consumption of computational resources.

### Further advancements

The method of calculating the point cloud hologram described above may utilise the wavefront information (i.e. complex light pattern) for the areas of intersection of all wavelets on the extended modulator from virtual image points that can pass through the entrance pupil of the viewer's eye. That is, all the sub holograms 820, 920 (including sub-hologram components 810, 811) associated with all virtual image points may be combined/superimposed to form the point cloud hologram for the virtual image 700.

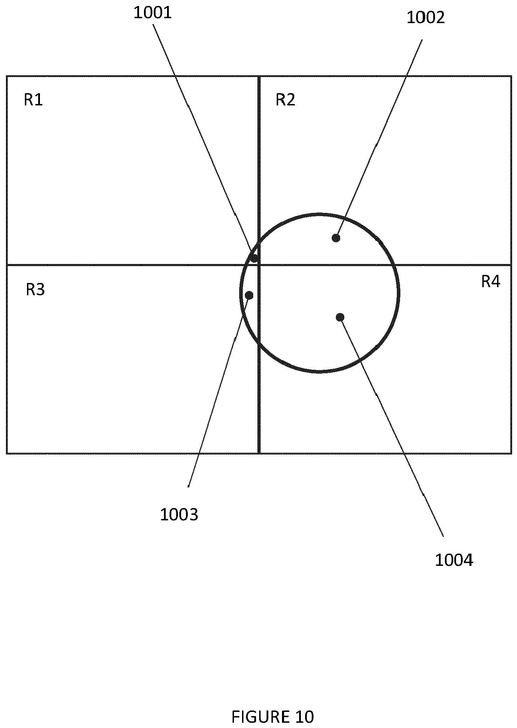

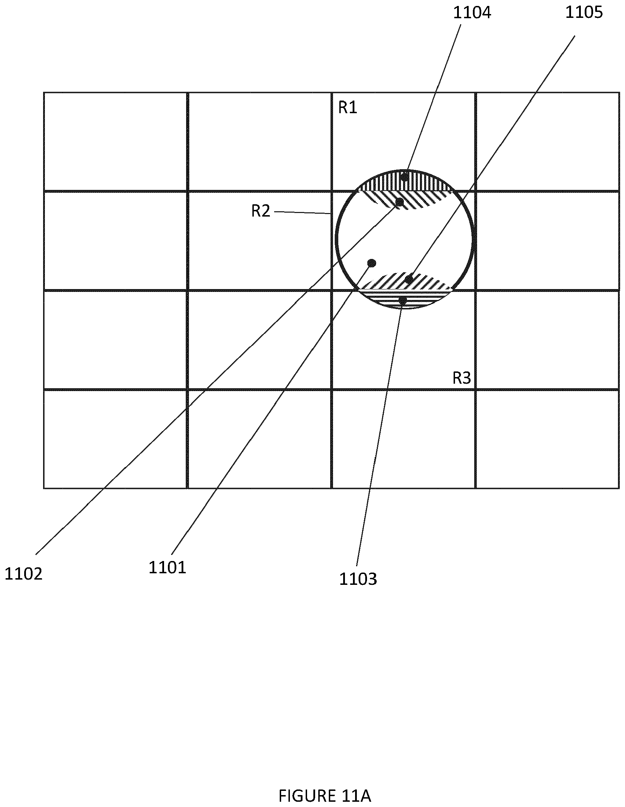

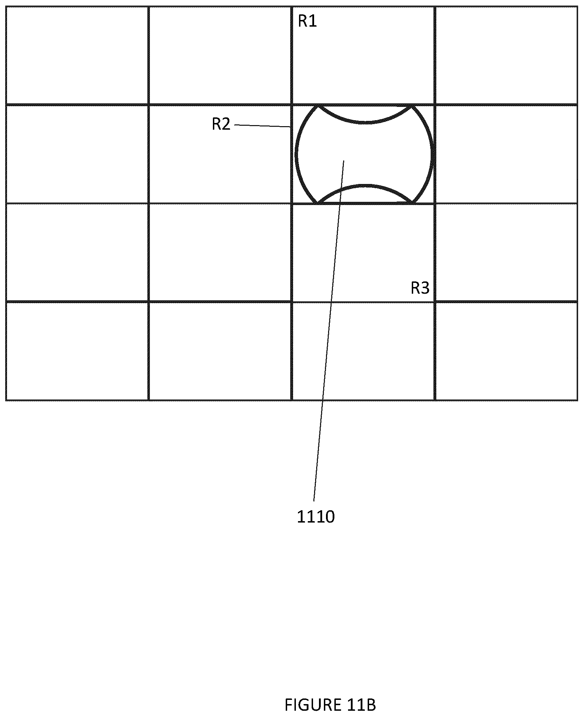

However, in some embodiments, certain criteria may be used to determine whether or not to include captured wavefront information in the final sub-hologram of a virtual image point. Two such criteria are described below with reference to Figures 10 and 11.

A first criterion is to include wavefront information (captured complex light pattern) in the final sub-hologram based on a threshold minimum size of area of intersection at the extended modulator. Figure 10 shows an example of a complex light pattern (shown as a circle), associated with a wavelet propagating from a virtual image point, captured at an area of intersection with an extended modulator. The area of intersection of the complex wavefront/light pattern comprises first, second third and fourth sub areas 1001, 1002, 1003, 1004 on respective, first, second, third and fourth adjacent "virtual replicas" R1, R2, R3, R4 of extended modulator. As described above, the virtual replicas R1, R2, R3 R4 are offset in different planes. The size of each sub area of intersection may be compared to a threshold value. For example, the threshold value may represent a minimum size of complex light pattern needed to form a wavefront of acceptable quality. If a sub area of intersection does not exceed the threshold value, the complex information may be discarded and may not be included in the final sub-hologram. Accordingly, this criterion eliminates any wavefront information that does not positively contribute to the point cloud hologram, and may reduce consumption of computational resources and/or memory - as well as significantly improving image quality

A second criterion is to include wavefront information (captured complex light pattern) in the final sub-hologram only if it is "visible" in only one replica of the extended modulator. Based on this criterion, the final sub-hologram (of the virtual image point) does not include wavefront information from overlapping areas of intersection. Including wavefront information from overlapping areas is undesirable, as "ghost" images/image points may be created from the (final) sub-hologram due to the different light ray paths through the pupil expander associated with each hologram replica. Figure 11A shows an example of a complex light pattern (shown bounded by a circle), associated with a wavelet propagating from a virtual image point, captured at an area of intersection with an extended modulator. Figure 11B shows the final sub-hologram determined using this criterion.

Referring to Figure 11A, the area of intersection of the complex wavefront/light pattern comprises first to fifth sub areas 1101, 1102, 1103, 1104, 1105 on first, second and third "virtual replicas" R1, R2, R3 of an extended modulator. As described above, the virtual replicas R1, R2, R3 are offset in different planes. The second virtual replica R2 is adjacent, and positioned between, each of the first and third virtual replicas R1, R3. First sub area 1101 of the complex light pattern is located at the centre of the second virtual replica R2 and does not overlap with the sub areas 1102, 1103, 1104, 1105 of the complex light pattern on the first and third virtual replicas R1, R3. Thus, in accordance with this criterion, the complex light pattern in the first sub area 1001 is included in the sub-hologram, as shown in Figure 11B. However, the second sub area 1102 of the complex light pattern - in a region at the top of second/middle virtual replica R2 - overlaps with the third sub area 1103 of the complex light pattern - in an equivalent region at the top of third virtual replica R3. Similarly, the fourth sub area 1104 of the complex light pattern - in a region at the bottom of the first virtual replica R1 - overlaps with the fifth sub area 1105 of the complex light pattern - in an equivalent region at the bottom of second/middle virtual replica R2. Thus, in accordance with this criterion, the complex light pattern in the overlapping second and third sub areas 1102, 1103 and the overlapping fourth and fifth sub areas 1104, 1105 are not included in the sub-hologram, as shown in Figure 11B. The method therefore comprises discarded sub-hologram component information that overlaps with or uses or corresponds to or requires the same part of the display device.

The embodiments described above relate to the calculation of a point cloud hologram. However, the skilled person will appreciate that the present disclosure may be used for the calculation of other types of holograms of a virtual image for an optical system comprising a display device and waveguide. In particular, the skilled person will understand how to apply the concept of a virtual surface comprising virtual image points (e.g. a staggered virtual surface of virtual replicas) at the hologram plane in methods of calculating other types of holograms.

### Additional features

In embodiments of the projector (optical system), the holographic reconstruction is colour. In some embodiments, an approach known as spatially-separated colours, "SSC", is used to provide colour holographic reconstruction. In other embodiments, an approach known as frame sequential colour, "FSC", is used.

Examples describe illuminating the SLM with visible light but the skilled person will understand that the light sources and SLM may equally be used to direct infrared or ultraviolet light, for example, as disclosed herein. For example, the skilled person will be aware of techniques for converting infrared and ultraviolet light into visible light for the purpose of providing the information to a user. For example, the present disclosure extends to using phosphors and/or quantum dot technology for this purpose.

Some arrangements describe 2D holographic reconstructions by way of example only. In other arrangements, the holographic reconstruction is a 3D holographic reconstruction. That is, in some arrangements, each computer-generated hologram forms a 3D holographic reconstruction.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solidstate memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A method of calculating a hologram of a virtual image (700) for an optical system comprising a display device arranged to display the hologram and a waveguide arranged to replicate the hologram, wherein the method comprises:
determining a sub-hologram (820, 920) of a virtual image point (701, 702) within an area (800, 900) defined by straight line paths (711, 721) from the virtual image point to the perimeter of an entrance pupil (730) of a viewer, wherein the area (800, 900) comprises at least part of a virtual replica of the display device formed by the waveguide.

2. A method as claimed in claim 1 further comprising:
identifying a virtual surface (710) between the virtual image (700) and waveguide, wherein the virtual surface (710) comprises the display device and a plurality of virtual replicas of the display device formed by the waveguide; and
identifying the area (800, 900) on the virtual surface (710).

3. A method as claimed in claim 1 or 2 wherein a first sub-hologram (820) of a first virtual image point (701) is determined within a first area (800) of a first virtual replica of the display device.

4. A method as claimed in claim 1 or 2 wherein a first sub-hologram (820) of a first virtual image point (701) comprises a first sub-hologram component (810) and a second sub-hologram component (811).

5. A method as claimed in claim 4 wherein:
the first sub-hologram component (810) is determined within a first area of a first virtual replica of the display device and the second sub-hologram component (811) is determined within a second area of a second virtual replica of the display device, or
the first sub-hologram component (810) is determined within a first area of a first virtual replica of the display device and the second sub-hologram component (811) is determined within a second area of the display device.

6. A method as claimed in claim 5 further comprising superimposing the first sub-hologram component (810) and second sub-hologram component (811) to form the first sub-hologram (820) of the first virtual image point (701).

7. A method as claimed in claim 6 wherein:
a sub-hologram component (810, 811) is discarded from the step of superimposing if its size is less than a threshold value, and/or
any portions of the first sub-hologram component (8100 and second sub-hologram component (811) that would overlap if superimposed are discarded from the step of superimposing.

8. A method as claimed in any preceding claim further comprising calculating a respective sub-hologram (820, 920) of each virtual image point of a plurality of virtual image points (701, 702) of the virtual image (700), optionally further comprising superimposing the respective sub-holograms (820, 920) to form a hologram of the virtual image (700).

9. A method as claimed in any preceding claim wherein each sub-hologram (820, 920) is a point cloud hologram determined by propagating a light wave from the corresponding virtual image point towards a viewer and determining the complex light field arriving at a corresponding position of the area, optionally, wherein the light wave is a spherical light wave.

10. A method as claimed in any preceding claim wherein each virtual replica of the display device formed by the waveguide is a different perpendicular distance from the display device such that a staggered virtual surface (710) of virtual replicas of the display devices is formed.

11. A method as claimed in any preceding claim wherein each virtual replica of the display device corresponds to a respective replica of the hologram formed by the waveguide.

12. A method as claimed in claim 10 or 11 further comprising determining the position of each virtual replica of the display device by unfolding the optical path within the waveguide from the display device to the corresponding replica of the hologram formed by the waveguide.

13. A method of calculating a hologram of a virtual image for an optical system comprising a display device arranged to display the hologram and a waveguide arranged to replicate the hologram, wherein the method comprises:
determining a sub-hologram (820, 920) of each virtual image point (701, 702) of the virtual image (700), wherein each sub-hologram (820, 920) is determined by:
propagating a light wave from the respective virtual image point (701) towards a viewer (720);
defining an area of intersection (800) of the propagating light wave at a virtual surface (710) between the virtual image (700) and the viewer (720), wherein the virtual surface (710) comprises the display device and a plurality of virtual replicas of the display device formed by the waveguide, wherein the defined area (800) is bounded by straight line paths (711) from the respective virtual image point (701) to the perimeter of the entrance pupil (730) of the viewer's eye;
identifying one or more sub-areas (1001-1004) of the defined area (800) of the complex light field, wherein each sub-area (1001-1004) intersects the virtual surface (710) at a position corresponding to a different one of the display device and the plurality of virtual replicas (R1-R4);
wherein each of the one or more sub-areas of the complex light field forms a respective component of the sub-hologram (820, 920).

14. A computer readable medium comprising instructions that, when executed by a processor, perform a method as claimed in any preceding claim.

15. A hologram engine for calculating a hologram of a virtual image for an optical system comprising a display device arranged to display the hologram and a waveguide arranged to replicate the hologram, wherein the hologram engine is arranged to determine a sub-hologram of a virtual image point within an area defined by straight line paths from the virtual image point to the perimeter of an entrance pupil of a viewer, wherein the area comprises at least part of a virtual replica of the display device formed by the waveguide.
